# EUROPEAN PATENT SPECIFICATION

(11) **EP 1 279 097 B1**
(45) Date of publication and mention of the grant of the patent: **08.10.2003**
(21) Application number: 00927726.0
(22) Date of filing: 05.05.2000
(51) Int. Cl.: G06F 9/46

(54) **SYSTEM AND PROCESS FOR INTEGRATING VOICE AND DATA IN TELECOMMUNICATION NETWORKS**
SYSTEM UND VERFAHREN ZUR SPRACH- UND DATENINTEGRATION IN EINEM TELEKOMMUNIKATIONSNETZ
SYSTEME ET PROCEDE D'INTEGRATION DE LA PAROLE ET DE DONNEES DANS DES RESEAUX DE TELECOMMUNICATIONS

(43) Date of publication of application: 29.01.2003
(73) Proprietor: Your Voice S.P.A., 20131 Milano (IT)
(72) Inventor: CHIESA, Giuseppe, I-20131 Milano (IT); TENISCI, Vincenzo, I-01033 Civita Castellana (IT)
(74) Representative: Pizzoli, Antonio
(86) International application number: IT0000176
(87) International publication number: WO01086436

(56) References cited:
- WO-A-00/02403
- "PERSONAL VIRTUAL ASSISTANT" CONITA TECHNOLOGIES INC., [Online] 1999, pages 1-5, XP002157581 Retrieved from the Internet: <URL:http://www.conita.com/systems.pdf> [retrieved on 2001-01-10]
- "MICROSOFT COMPONENT SERVICES. SERVER OPERATING SYSTEM. A TECHNOLOGY OVERVIEW." MICROSOFT CORPORATION, [Online] 15 August 1998 (1998-08-15), pages 1-5, XP002157582 Retrieved from the Internet: <URL:http://www.eu.microsoft.com/com/wpape r/compsvcs.asp> [retrieved on 2001-01-10]
- PEERSMAN G., CVETKOVIC S. R., SMYTHE C., SPEAR H., GRIFFITHS P.: "THE INTEGRATION OF SMS WITH VOICE BASED TECHNOLOGY" THE INSTITUTION OF ELECTRICAL ENGINEERS. IEE, SAVOY PLACE, LONDON, UK, [Online] 1997, pages 9/1-9/7, XP002157583 Retrieved from the Internet: <URL:http://ieeexplore.ieee.org/iel3/5176/ 14012/00643776.pdf> [retrieved on 2001-01-10]

## Description

The present invention relates to a system and a process for integrating voice and data in telecommunication networks, and in particular for mutually integrating communications in analog and/or digital form effected through the telephone network and Internet.

It is known that at present the market provides to the system designers hardware and software technologies and development tools which allow to easily carry out services based on the integration of communications containing voice and data, which are effected through the telephone network and Internet. However, since these known systems must work on a broad scale due to the very high number of users connectable through these networks, the hardware and software resources necessary for the carrying out thereof must be permanently reserved for this purpose. Therefore, these resources cannot be temporarily reused for other services, unless the same services are completely redesigned.

Document XP002157582 relating to the COM technology of the firm Microsoft discloses some development tools which comprise software modules and message services for implementing data processing programs or components. However, this document does not suggests not only how these tools can be employed for developing programs or components, but also how the latter are carried out and are used in combination with telecommunication devices, in order to integrate voice and data in telecommunication networks.

On the other hand, document XP002157581 relating to the PVA technology of the firm Conita discloses a system which allows the creation of applications integrating voice and data when used in conjunction with said COM technology. However, this known system could easily become overloaded during a voice and data integration in telephone and distributed networks, such as the Internet, when a particular service requested by a network is not available on a server, for instance due to a maintenance operation.

It is therefore an object of the present invention, as claimed, to provide a system for integrating voice and data in telecommunication networks, which can be easily not only carried out but also managed by the users and/or by the operators according to the required services, without affording the typical problems of the services distributed in a local or geographical network. Said object is achieved with a system, the main features of which are disclosed in the first claim and other features are disclosed in the following claims.

Another object of the present invention is to provide a process for integrating voice and data in telecommunication networks based on such a system. Said obiect is achieved with a process, the main features of which are disclosed in claim 15 and other features are disclosed in the following claims.

Thanks to the particular architecture of the system according to the present invention, it is possible to design and implement in a simple and quick way a set of services based on software components which are standard or anyway easy to carry out.

Furthermore, by using a set of plug-ins supported by a software platform and mutually communicating with messages which have a standard format and are structured in a manner independent from the relevant content, the system according to the present invention uses several program levels which are independent from the kind of the required service. Since these plug-ins simultaneously work as software server and client of the system, it is possible to easily aggregate heterogeneous program components for carrying out complex services.

The system advantageously comprises one or more message handling components which allow a transparent management of the communication channels and of the relevant protocol for sending messages. These components also allow the activation of plug-ins executing sets of instructions which can be recalled by a file and/or database server.

Another advantage of the system lies in the use of standard software objects for carrying it out, so that it can be easily maintained and extended with other devices, if necessary. This extension can be made in a simple way by creating suitable plug-ins comprising software objects provided by third parties and dedicated to the control of such devices.

A further advantage of the system according to the present invention lies in the possibility of carrying out with it new processes for integrating voice and data, which cannot be achieved on a broad scale with the known systems.

In particular, the system according to the present invention can be employed for carrying out a process consisting of the automatic transmission to a receiver, by means of a telephone call, of a musical piece chosen by a sender through an Internet connection. The sender can further record and send with the musical piece a dedication made by means of a vocal and/or written message.

Further advantages and features of the system and the process according to the present invention will result evident to those skilled in the art by the following detailed and non-limiting description of an embodiment thereof with reference to the attached drawings wherein:
- figure 1 shows a scheme of such embodiment of the system according to the present invention;
- figure 2 shows a scheme of the software platform of the system of figure 1; and
- figure 3 shows a flow chart of such embodiment of the process according to the present invention.

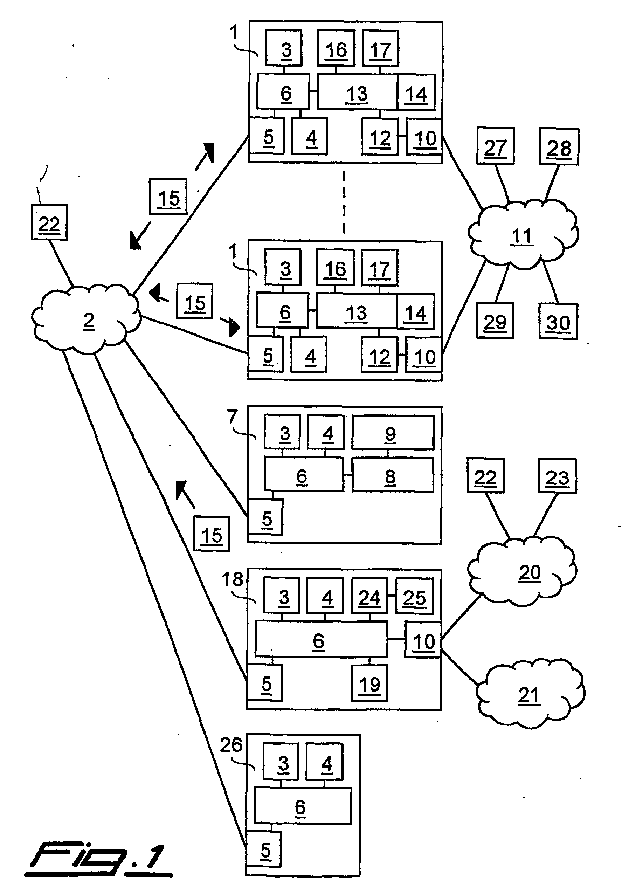

Referring to figure 1, it is seen that the system according to the present invention comprises one or more application servers 1 mutually connected through a data network 2, in particular an Ethernet LAN network. The number of application servers 1 connected in the network can change according to the workload required for the services which can be provided by the system. Each application server 1 consists of a known computer provided with at least one microprocessor 3, one RAM memory 4 and a network interface 5, which are controlled by an operating system 6 provided with a message manager, for instance the operating system Windows NT 4.0 with the program Message Queue, both provided by the firm Microsoft. To that network 2 of application servers 1 is further connected at least one computer of the above mentioned kind acting as a file and/or database server, wherein for instance a database management program 8, for example the program SQL Server 7.0 of the firm Microsoft, and a database 9 comprising data necessary to the system for carrying out one or more services according to its configuration, are installed.

On one or more application servers 1 are further installed some communication devices 10, such as for instance communication boards and/or modems for sending and receiving SMS, voice, audio, fax, etc. messages, which are connected to the telephone network 11. These communication devices 10 are controlled by specific modular program components 12, called plug-ins later on, which are supported in a known way by a suitable software platform 13 installed onto each application server 1. For creating these communication plug-ins it is possible to use the ActiveX or COM (Component Object Model) software objects of the firm Microsoft, which are a standard for writing distributed program components. The use of one or more COM software objects obviously depends on the kind of communication device 10 which must be controlled by the relevant communication plug-in 12.

Such software platform 13 instead consists of a program which suitably employs one or more plug-ins according to the commands received by one or more program components 14, which are suitable to receive on a queue in the network 2 some messages 15 in a standard format, for example in the XML (Extensible Mark-up Language) format. Such message queue can be present on the communication channel managed by the above mentioned program Message Queue. By using a standard format, these message handling components 14 can receive messages 15 structured in a manner independent from the relevant content. In particular, it is possible to define message structures which can contain instructions executable by all the plug-ins of platform 13. The message handling components 14 can extract from each received message the significant data, for instance running parameters of one or more plug-ins of the same platform 13, and in the meanwhile ignore non-relevant data, which can be used by plug-ins of other platforms 13, for example a communication plug-in 12 of another application server 1. Therefore, in the same message 15 can be present the parameters relating to the running of more plug-ins, which are activated from time to time at the moments and/or in the modes specified by these parameters.

The message handling components 14 are activated through an event which may consist of an automatic command generated by a program or of a manual command generated by a user or an operator, said commands being contained in standard messages 15 transmitted through one or more communication channels, such as for instance the communication channels defined by the known TCP/IP, POP3 and HTTP protocols or by the same communication channel managed by the above mentioned Message Queue program. The message handling components 14 can therefore receive, on univocal addresses assigned thereto, some messages 15 coming from inside or outside the system, interpret them and then activate the plug-ins of platform 13. These plug-ins can in turn generate one or more messages 15 in a standard format, for instance the same XML format, containing a set of instructions which are executed by other plug-ins present on the platforms 13 installed on the various application servers 1 of the system according to the present invention.

In particular, these plug-ins may comprise one or more routing plug-ins 16 which interpret messages 15 and route them among the various application servers 1 of the system according to the kind of instructions contained therein and/or of the momentary workload of each application server 1. Furthermore, these plug-ins comprise one or more plug-ins 17 which execute the instructions contained in the standard messages 15. The format and the execution manner of these instructions by the executing plug-ins 17 may for example be based upon the standard language VBScript of the firm Microsoft.

The necessary data for executing these instructions may be also extracted from server 7, while the necessary hardware resources may be recalled by generating and sending further messages 15 in a standard format to other application servers 1, wherein the message handling components 14 activate one or more communication plug-ins 12, which in turn control the communication devices 10 according to the instructions and the data received from the executing plug-ins 17 and/or from server 7.

To the network 2 is also connected a computer 18 acting in a known way as a web server, which is provided with a program 19 for sending and receiving e-mails and/or for the direct connection through Internet 20 and/or an Intranet network 21. One or more users and/or operators provided with a computer 22 or a telephone 23 with WAP protocol acting as clients can therefore communicate with the server network 2 through e-mails and/or by directly accessing to such web server, on which a website 24 comprising one or more hypertext pages 25 acting as user interface, is stored. With this arrangement, the users and/or the operators can interact with the system according to the present invention, for instance for setting the flow of the operations which can be executed by the system itself. A computer 22 acting as a client, for example belonging to an operator, can also be directly connected to network 2.

The system according to the present invention further comprises a control computer 26 connected to network 2, which acts as a network controller or Primary Domain Controller (PDC), as well as controller of the queues of messages 15.

A plurality of communication apparatuses, such as for instance analog telephones 27, digital telephones 28, cellular telephones 29, fax machines 30, etc., is obviously connected to the telephone network 11.

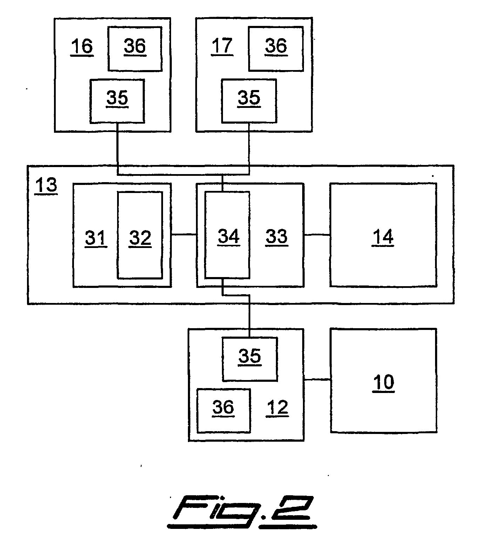

Referring now also to figure 2, it is seen that the software platform 13 comprises a plug-in activation component 31, through which each application server 1 can be configured so as to allow the activation of a certain number of message handling components 14 on message queues. This configuration can be set in a manual way with the data transmitted by an operator through a client 22 connected to network 2, or in an automatic way with the data present in the file and/or database server 7. Through this data it is possible to configure the architecture of the system according to the present invention and in particular initialize the message handling components 14 of each software platform 13. The plug-in activation component 31 preferably comprises a known software object 32, for instance of the COM type, for the remote connection with the application servers 1 through clients 22.

The software platform 13 further comprises a component 33 for configuring the COM software objects composing the various plug-ins, so that the latter can be correctly activated by the message handling components 14. The activation of the plug-ins is carried out by means of a software interface 34 carried out with the COM technology. This interface indicates the functions which must be implemented by the various plug-ins, so that the running parameters contained in the messages 15 can be transmitted through it The configuration component 33 further controls the parallel execution of more message handling components 14, thereby allocating a predetermined number of operative flows or threads for the activation of the plug-ins. Through a function for the parallel execution of more components it is possible to activate a plug-in by assigning thereto the first free thread when a message 15 indicating the kind of the plug-in to be activated through interface 34 is received. The use of a set of threads having a predetermined size allows the definition of a maximum number of plug-ins which can be executed by each message handling component 14.

Plug-ins 12, 16 and 17 are components preferably carried out with ActiveX software objects of the firm Microsoft, among which a software object 35 implementing interface 34 is present. During the use, each plug-in waits for the reception of instructions from a message handling component 14, which extracts these instructions from a message 15 received on its message queue. For using each plug-in, at least one message handling component 14 is configured in a waiting mode. When this component receives a message 15 containing the identification code of the plug-in to be activated, the latter is activated, in particular through the software interface 34.

The executing plug-ins 17 of an application server 1 execute a set of instructions contained in the standard format messages 15 received by a message handling component 14. According to the required task, the executing plug-ins 17 interact with plug-ins of other application servers 1 by sending messages 15 to the relevant waiting message handling components 14, or activate the communication plug-ins 12 for employing the communication devices 10 on the same application server 1. For this purpose, each plug-in 12, 16, 17 preferably comprises a message generating component 36, which allows the generation of further messages in a standard format for message handling components 14 waiting on other application servers.

There can be of different kinds of communication plug-ins 12 which depend on the communication devices 10 controlled by them.

In particular, a first kind of communication plug-in 12 can be dedicated to the e-mail sending and comprises in a known way the functions of extracting from a message 15 and/or from server 7 the content of the e-mail and the attachments, if any, to be sent, of associating the content to one or more addresses of receivers obtained from the same message 15 and/or server 7, as well as of sending one or more e-mails by connecting through a communication device 10, for instance a digital modem, to the telephone network 11.

A second kind of communication plug-in 12 can be dedicated to the sending of SMS messages and comprises in a known way the functions of extracting from a message 15 and/or from server 7 the content of the SMS message to be sent, of associating the content of the SMS message to one or more telephone numbers of receivers obtained from the same message 15 and/or server 7, as well as of sending one or more SMS messages by connecting through a communication device 10, for instance a GSM modem, to the telephone network 11.

A third kind of communication plug-in 12 can be dedicated to the sending of fax messages and comprises in a known way the functions of extracting from a message 15 and/or from server 7 the content of the fax message to be sent, of associating the content of the fax message to one or more telephone numbers of receivers obtained from the same message 15 and/or server 7, as well as of sending one or more fax messages by connecting through a communication device 10, for instance a fax/modem, to the telephone network 11.

A fourth kind of communication plug-in 12 can be dedicated to the transmission and/or reception of telephone calls. This particular communication plug-in can control a communication device 10, such as for instance one or more analog or digital telephone boards of a known kind. These telephone boards allow to send voice or audio communications by recalling one or more audio files, for instance of the mp3, wav or .voc kind, previously recorded or created with automatic conversion programs from text message to voice message. They further allow to receive and send multifrequency tones, as well as record voice or audio communications, by transforming them into audio files, after being sampled if received in an analog form. Another function of these telephone boards lies in the possibility of calling and mutually connecting more lines, preferably with the recognition of the presence of an answering machine, if connected to a line.

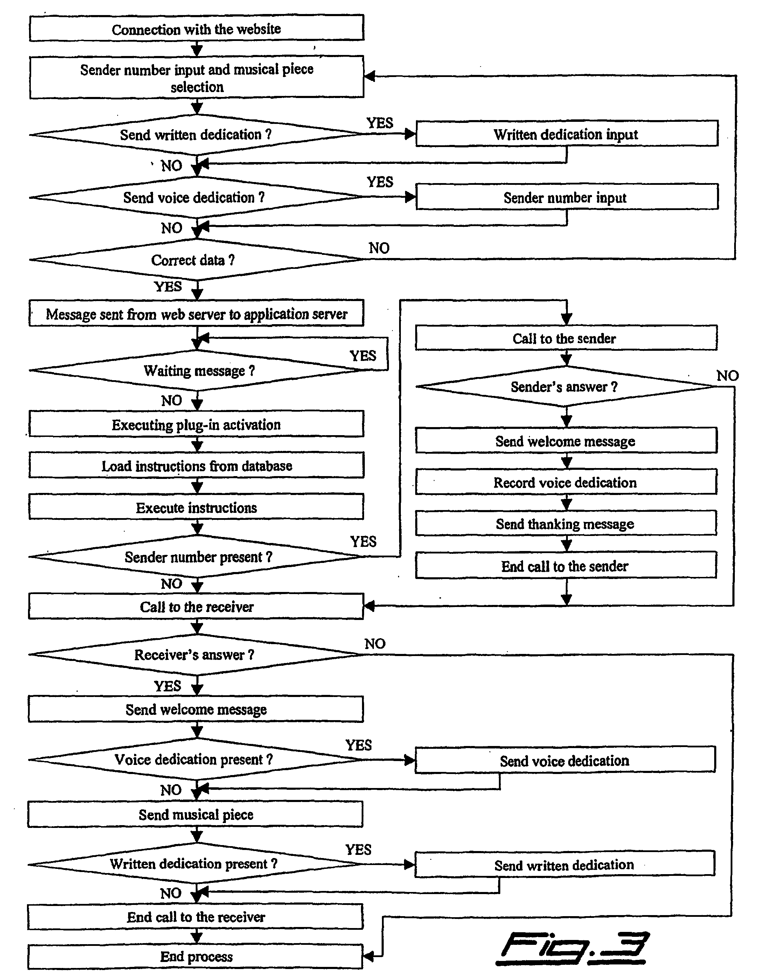

Referring now to figure 3, it is seen that a process that can be carried out by means of the system according to the present invention comprises a first operative step wherein a sender connects himself through his computer 22 or his telephone 23, if provided with the WAP technology, to website 24 contained into web server 18. By sending an e-mail or compiling one or more forms carried out with the hypertext pages 25, the sender selects among a list of musical pieces at least one musical piece to be sent and transmits the telephone number of the receiver. The sender may transmit through the hypertext pages 25 also his telephone number and/or a written text containing the dedication to be sent through a SMS message. Once these data have been sent to web server 18, the latter verifies its validity and in the positive case generates a message 15 and sends it to a message handling component 14 waiting on an application server 1. This message contains the telephone number of the receiver, the title or a code of the musical piece chosen by the sender, the telephone number of the sender, if any, and the written message, if any.

Such message handling component 14, after the reception of message 15 from web server 18, activates an executing plug-in 17 which recalls from server 7 the instructions relating to the process according to the present invention and the audio file corresponding to the musical piece chosen by the sender.

If the telephone number of the sender is also present in message 15, the executing plug-in 17 activates a communication plug-in 12 and makes through a telephone board 10 an outgoing call to telephone 27 of the sender. Through this call, the sender may dictate a dedication voice message, after having listened to a welcome message, if any, contained in an audio file, which is recalled as above from server 7 and is transmitted by the telephone board 10. The dedication voice message is recorded in another audio file, after which the sender may listen to a thanking message contained in a further audio file, always recalled from server 7 and transmitted by the telephone board 10. Once the telephone connection with the sender is ended, the executing plug-in 17 activates a communication plug-in 12 and makes through a telephone board 10, not necessarily the same telephone board 10 used for the call to the sender, an outgoing call to telephone 29 of the receiver. If the receiver answers, the executing plug-in 17 may send a welcome message and/or the dedication voice message, if any, recorded by the sender, after which it transmits the musical piece chosen by the sender. Once the execution of this musical piece is ended, the executing plug-in 17 activates a communication plug-in 12 which in turn controls a GSM modem 10 for sending a SMS message corresponding to the written dedication of the sender, if it is present. After this last operative step, the call to the receiver is ended, so as the process according to the present invention.

## Claims

1. System for integrating voice and data in telecommunication networks comprising:
- one or more application servers (1) mutually connected through a data network (2) and provided with at least a microprocessor (3), a RAM memory (4), a network interface (5), which are controlled by an operating system (6) provided with a message manager;
- at least one server (7) acting as a file and/or database server;
- one or more communication devices (10) which are installed on at least one application server (1) and are connected to the telephone network (11);
wherein:
- said communication devices (10) are controlled by communication plug-ins (12) supported by a software platform (13) installed on the application servers (1);
- said software platform (13) employs one or more plug-ins (12, 16, 17) according to the data received by one or more message handling components (14) suitable to receive in the network (2) messages (15) in a standard format containing data for the execution of these plug-ins (12, 16, 17), said messages being structured in a manner independent from the relevant content;
- said plug-ins (12, 16, 17) comprise one or more executing plug-ins (17) which execute instructions transmitted by the message handling components (14) according to the data contained in said messages (15);
**characterised in that**:
- said file and/or database server (7) comprises further data for executing said instructions for the executing plug-ins (17);
- said plug-ins (12, 16, 17) supported by the software platform (13) installed on an application server (1) comprise a message generating component (36) for sending further messages (15) in a standard format to the plug-ins (12, 16, 17) supported by a software platform (13) installed on other application servers (1);
- said further messages (15) comprise data obtained from the file and/or database server (7);
- said message handling components (14) are suitable to be activated by an event consisting of an automatic command generated by a program or of a manual command generated by a user or an operator, said commands being contained in messages (15) in a standard format transmitted through one or more communication channels.

2. System according to the previous claim, **characterized in that** said plug-ins (12, 16, 17) comprise one or more routing plug-ins (16) which interpret the messages (15) in a standard format and route them among the various application servers (1) according to the kind of instructions contained therein and/or of the momentary workload of each application server (1).

3. System according to any previous claims ,**characterized in that** said communication plug-ins (12) comprise at least one plug-in suitable to extract from a message (15) and/or from the file and/or database server (7) the content of an e-mail and the attachments, if any, to be sent, to associate this content to one or more addresses of receivers obtained from the same message (15) and/or the file and/or database server (7), as well as to send one or more e-mails by connecting through a communication device (10), for instance a digital modem, to the telephone network (11).

4. System according to any previous claim, **characterized in that** said communication plug-ins (12) comprise at least one plug-in suitable to extract from a message (15) and/or from the file and/or database server (7) the content of a SMS message to be sent, to associate this content to one or more telephone numbers of receivers obtained from the same message (15) and/or the file and/or database server (7), as well as to send one or more SMS messages by connecting through a communication device (10), for instance a GSM modem, to the telephone network (11).

5. System according to any previous claim, **characterized in that** said communication plug-ins (12) comprise at least one plug-in suitable to extract from a message (15) and/or from the file and/or database server (7) the content of a fax message to be sent, to associate this content to one or more telephone numbers of receivers obtained from the same message (15) and/or the file and/or database server (7), as well as to send one or more fax messages by connecting through a communication device (10), for instance a fax/modem, to the telephone network (11).

6. System according to any previous claim, **characterized in that** said communication plug-ins (12) comprise a plug-in suitable to transmit and/or receive telephone communications through a communication device (10).

7. System according to the previous claim, **characterized in that** said communication device (10) consists of at least one telephone board suitable to send voice or audio communications by recalling one or more audio files, to receive and send multifrequency tones, as well as record voice or audio communications by transforming them into audio files.

8. System according to the previous claim, **characterized in that** said telephone board (10) is suitable to call and mutually connect more lines, preferably with the recognition of the presence of an answering machine, if connected to a line.

9. System according to any previous claim, **characterized in that** said software platform (13) comprises a plug-in activation component (31), through which each application server (1) is configured so as to allow the activation of a certain number of message handling components (14) on message queues.

10. System according to the previous claim, **characterized in that** said configuration of the application servers (1) is set in a manual way with the data transmitted by a client (22) connected to said network (2).

11. System according to the claim 9, **characterized in that** said configuration of the application servers (1) is set in an automatic way with the data present in the file and/or database server (7).

12. System according to any of claims 9 to 11, **characterized in that** said plug-in activation component (31) comprises a software object (32) for the remote connection with the application servers (1) through one or more clients (22).

13. System according to any previous claim, **characterized in that** a web server (18) connected to Internet (20) and/or an Intranet network (21) is also connected to said network (2).

14. System according to any previous claim, **characterized in that** a network and/or message queue controller (26) is also connected to said network (2).

15. Process which can be carried out by means of the system according to any previous claim, **characterized in that** it comprises the following operative steps:
- a sender connects to a web server (18);
- the sender selects at least one musical piece among a list of musical pieces contained in the web server (18) and transmits the telephone number of a receiver;
- the web server (18) sends a message (15) in a standard format containing said telephone number and information about the musical piece chosen by the sender to a message handling component (14) waiting on an application server (1);
- said message handling component (14) activates an executing plug-in (17) upon the reception of said message;
- said executing plug-in (17) recalls from the file and/or database server (7) a set of instructions and an audio file corresponding to the musical piece chosen by the sender;
- said executing plug-in (17) activates a communication plug-in (12) and calls the number of the telephone (29) of the sender;
- said executing plug-in (17) transmits to the telephone (29) of the sender the musical piece chosen by the sender.

16. Process according to the previous claim, **characterized in that** it comprises the following operative steps:
- the sender transmits to the web server (18) his own telephone number;
- the web server (18) sends a message (15) in a standard format containing said telephone number to a message handling component (14) waiting on an application server (1);
- said message handling component (14) activates an executing plug-in (17);
- said executing plug-in (17) recalls a set of instructions from the file and/or database server (7);
- said executing plug-in (17) activates a communication plug-in (12) and calls the number of the telephone (27) of the sender;
- the sender dictates to the telephone (27) a voice message which is recorded into an audio file;
- said executing plug-in (17) transmits to the telephone (29) of the receiver said voice message.

17. Process according to the previous claim, **characterized in that** before and/or after the sender dictates to the telephone (27) said voice message, he may listen to a welcome and/or thanking message contained in audio files which are recalled from the file and/or database server (7) from said executing plug-in (17) and are transmitted to said telephone (27) by said communication plug-in (12).

18. Process according to any of claims 15 to 17, **characterized in that** it comprises the following operative steps:
- the sender transmits a written message to the web server (18);
- the web server (18) sends a message (15) in a standard format containing said written message to a message handling component (14) waiting on an application server (1);
- said message handling component (14) activates an executing plug-in (17);
- said executing plug-in (17) recalls from the file and/or database server (7) a set of instructions;
- said executing plug-in (17) transmits to the telephone (29) of the receiver a SMS message corresponding to said written message.

## Patentansprüche

1. System zur Sprach- und Datenintegration in einem Telekommunikationsnetzwerk, mit:
- einem oder mehreren Appllkaüons-Servem (1), die untereinander durch ein Daten-Netzwerk (2) verbunden sind, mit zumindest einem Mikroprozessor (3), einem RAM-Speicher (4) und einer Netzwerk-Schnittstelle (5) versehen sind und durch ein Betriebssystem (6) gesteuert werden, das mit einem Nachrichten-Verwaltungsprogramm versehen ist;
- zumindest einem Server (7), der als Datei- und/oder Datenbank-Server dient;
- einer oder mehreren Kommunikationseinrichtungen (10), die auf zumindest einem Applikations-Server (1) installiert sind und mit dem Telefonnetzwerk (11) verbunden sind;
- welche Kommunikationseinrichtungen (10) durch Kommunikations-Programmmodule (12) gesteuert werden, die durch eine Software-Plattform (13) unterstützt werden, die auf den Applikations-Servem (1) installiert ist:
- welche Software-Plattform (13) eines oder mehrere Programmmodule (12,16,17) verwendet, in Abhängigkeit von den Daten, die von einer mehreren Nachrichtenüberrnittlungs-Komponenten (14) empfangen werden, welche dazu geeignet sind, in dem Netzwerk (2) Nachrichten (15) in einem Standardformat zu empfangen, die Daten zur Ausführung dieser Programmmodule (12,16,17) enthalten, welche Nachrichten in einer Weise strukturiert sind, die von dem relevanten Inhalt unabhängig ist;
- welche Programmmodule (12,16,17) eines oder mehrere Ausführungs-Programmmodule (17) umfassen, die Befehle ausführen, die von den Nachrichtenübermittlungs-Komponenten (14) entsprechend den in den Nachrichten (15) enthaltenen Daten übermittelt werden;
**dadurch gekennzeichnet, daß**
- der Datei- und/oder Datenbank-Server (7) ferner Daten zum Ausführen der Befehle für die Ausführungs-Programmmodule (17) umfaßt;
- die Programmmodule (12,16,17), die durch die auf dem Applikations-Server (1) installierte Software-Plattform (13) unterstützt werden, eine Nachrichtenerzeugungs-Komponente (36) umfassen, zum Senden weiterer Nachrichten (15) in einem Standardformat an die Programmmodule (12,16,17), die durch eine Software-Plattform (13) unterstützt werden, die auf anderen Applikations-Servern (1) installiert ist;
- daß die weiteren Nachrichten (15) Daten umfassen, die von dem Dateiund/oder Datenbank-Server (7) stammen;
- und die Nachrichtenübermittlungs-Komponenten (14) dazu geeignet sind, durch ein Ereignis aktiviert zu werden, bestehend aus einem automatischen Befehl, der durch ein Programm erzeugt wird, oder einem von Hand eingegebenen Befehl, der durch einen Benutzer oder eine Bedienungsperson erzeugt wird. welche Befehle in Nachrichten (15) in einem Standardformat enthalten sind, die durch einen oder mehrere Kommunikationskanäle übermittelt werden.

2. System gemäß dem vorhergehenden Anspruch, **dadurch gekennzeichnet, daß** die Programmmodule (12,16,17) eines oder mehrere Leitungs-Programmmodule (16) umfassen, die die Nachrichten (15) in einem Standardformat interpretieren und sie zwischen den unterschiedlichen Applikations-Servern (1) entsprechend der Art der darin enthaltenen Befehle und/oder der momentanen Auslastung jedes Applikations-Servers (1) leiten.

3. System gemäß einem der vorhergehenden Ansprüche, **dadurch gekennzeichnet, daß** die Kommunikations-Programmmodule (12) zumindest ein Programmmodul umfassen, das dazu geeignet ist, aus einer Nachricht (15) und/oder dem Datei- oder Datenbankserver (7) den Inhalt einer zu sendenden E-Mail und gegebenenfalls vorhandener Anlagen zu ermitteln, diesen Inhalt einer oder mehreren Empfängeradressen zuzuordnen, die aus der gleichen Nachricht (15) und/oder dem Datei- oder Datenbankseiver (7) stammen, sowie eine oder mehrere E-Mails durch Verbinden durch eine Kommunikationseinrichtung (10) wie etwa ein digitales Modem mit dem Telefonnetzwerk (11) zu verschicken.

4. System gemäß einem der vorhergehenden Ansprüche, **dadurch gekennzeichnet**, die Kommunikations-Pogrammmodule (12) zumindest ein Programmmodul umfassen, das dazu geeignet ist, aus einer Nachricht (15) und/oder von dem Datei- und/oder Datenbankserver (7) den Inhalt einer zu versendenden SMS-Nachricht zu ermitteln, diesen Inhalt einer oder mehreren Empfänger-Telefonnummern zuzuordnen, die aus der gleichen Nachricht (15) und/oder dem Datei- und/oder Datenbankserver (7) stammen, sowie eine oder mehrere SMS-Nachrichten durch Verbinden durch eine Kommunikationseinrichtung (10) wie etwa ein GSM-Modem an das Telefonnetzwerk (11) zu versenden.

5. System gemäß einem der vorhergehenden Ansprüche, **dadurch gekennzeichnet, daß** die Kommunikations-Programmmodule (12) zumindest ein Programmmodul umfassen, das dazu geeignet ist, aus einer Nachricht (15) und/oder dem Datei- und/oder Datenbankserver (7) den Inhalt einer zu versendenden Fax-Nachricht zu ermitteln, diesen Inhalt einer oder mehreren Empfänger-Telefonnummern zuzuordnen, die aus der gleichen Nachricht (15) und/oder dem Datei- und/oder Datenbankserver (7) stammt, sowie eine oder mehrere Fax-Nachrichten durch Verbinden durch eine Kommunikationseinrichtung (10) wie etwa ein Fax-Modem an das Telefonnetzwerk (11) zu versenden.

6. System gemäß einem der vorhergehenden Ansprüche, **dadurch gekennzeichnet, daß** die Kommunikations-Programmmodule (12) ein Programmmodul umfassen, das dazu geeignet ist, Telefonverbindungen durch eine Kommunikationseinrichtung (10) zu übertragen und/oder zu empfangen.

7. System gemäß dem vorhergehenden Anspruch, **dadurch gekennzeichnet, daß** die Kommunikationseinrichtung (10) aus zumindest einer Telefonplatine besteht, die dazu geeignet ist, Sprach- oder Tonbotschaften durch Abruf einer oder mehrerer Audio-Dateien zu versenden, Mehrfrequenz-Töne zu empfangen und zu senden, sowie Sprach- oder Tonbotschaften durch Umwandlung in Audio-Dateien aufzuzeichnen.

8. System gemäß dem vorhergehenden Anspruch, **dadurch gekennzeichnet, daß** die Telefonplatine (10) dazu geeignet ist, mehrere Leitungen anzusprechen und untereinander zu verbinden, vorzugsweise unter Erkennung des Vorhandenseins eines Anrufbeantworters bei Verbindung mit einer Leitung.

9. System gemäß einem der vorhergehenden Ansprüche, **dadurch gekennzeichnet**, data die Software=Plattform (13) eine Programmmodul-Aktivierungskomponente (31) umfaßt, durch die jeder Applikations-Server (1) so konfiguriert ist, daß die Aktivierung einer bestimmten Anzahl von Nachrichtenübermittlungs-Komponenten (14) in Nachrichtenwarteschlangen ermöglicht wird.

10. System gemäß dem vorhergehenden Anspruch, **dadurch gekennzeichnet, daß** die Konfiguration der Applikations-Server (1) von Hand anhand der Daten vorgenommen wird, die von einem mit dem Netzwerk (2) verbundenen Klienten (22) übertragen werden.

11. System gemäß Anspruch 9, **dadurch gekennzeichnet, daß** die Konfiguration der Applikations-Server (1) automatisch anhand der Daten durchgeführt wird, die in dem Datei- und/oder Datenbankserver (7) vorhanden sind.

12. System gemäß einem der Ansprüche 9 bis 11, **dadurch gekennzeichnet, daß** die Programmmodul-Aktivierungskomponente (31) ein Software-Objekt (32) für die Femverbindung mit den Applikations-Servern (1) über einen oder mehrere Klienten (22) umfaßt.

13. System gemaß einem der vorhergehenden Ansprüche, **dadurch gekennzeichnet, daß** ein mit dem Internet (20) und/oder einem Intranet-Netzwerk (21) verbundener Netzserver (18) ebenfalls mit dem Netzwerk (2) verbunden ist.

14. System gemäß einem der vorhergehenden Ansprüche, **dadurch gekennzeichnet, daß** ein Netzwerk- und/oder Nachrichtenwarteschlangen-Controller (26) ebenfalls mit dem Netzwerk (2) verbunden ist.

15. Verfahren, das mittels des Systems gemäß einem der vorhergehenden Ansprüche durchgeführt werden kann, **gekennzeichnet durch** die folgenden Durchführungsschritte:
- ein Sender baut eine Verbindung zu einem Netzserver (18) auf;
- der Sender wählt zumindest ein Musikstück aus einer in dem Netzserver (18) enthaltenen Liste von Musikstücken aus und übermittelt die Telefonnummer an einen Empfänger;
- der Netzserver (18) sendet eine Nachricht (15) in einem Standardformat, die die Telefonnummer und eine Information über das von dem Sender ausgewählte Musikstück enthält, an eine Nachrichtenübermittlungs-Komponente (14), die auf einem Applikations-Server (1) bereitgestellt ist;
- die Nachrichtenübermittlungs-Komponente (14) aktiviert ein Ausführungs-Programmmodul (17) auf den Erhalt der Nachricht hin;
- das Ausführungs-Programmmodul (17) ruft von dem Datei- und/oder Datenbankserver (7) einen Befehlsatz und eine Audiodatei entsprechend dem vom Sender ausgewählten Musikstück ab;
- das Ausführungs-Programmmodul (17) aktiviert ein Kommunikations-Programrnmodul (12) und wählt die Nummer des Telefons (29) des Senders;
- das Ausführungs-Programmmodul (17) überträgt das vom Sender ausgewählte Musikstück an das Telefon (29) des Senders.

16. Verfahren gemäß dem vorhergehenden Anspruch, **gekennzeichnet durch** die folgenden Durchführungsschritte:
- der Sender überträgt seine eigene Telefonnummer an den Netzserver (18);
- der Netzserver (18) sendet eine Nachricht (15) in einem Standardformat, die die Telefonnummer enthält, an eine Nächrichtenübermittlungs-Komponente (14), die auf einem Applikations-Server (1) bereitsteht;
- die Nachrichtenübermittlungs-Komponente (14) aktiviert ein Ausführungs-Programmmodul (17);
- das Ausführungs-Programmmodul (17) ruft einen Befehlsatz von dem Datei- und/oder Datenbankserver ab;
- das Ausführungs-Programmmodul {17) aktiviert ein Kommunikations-Programmmodul (12) und wählt die Nummer des Telefons (27) des Senders;
- der Sender diktiert in das Telefon (27) eine Sprachnachricht, die in einer Audiodatei aufgezeichnet wird;
- das Ausführungs-Programmmodul (17) überträgt die Sprachnachricht an das Telefon (29) des Empfängers.

17. Verfahren gemäß dem vorhergehenden Anspruch, **dadurch gekennzeichnet, daß** der Sender, bevor und/oder nachdem er die Sprachnachricht in das Telefon (27) diktiert hat, eine Willkommens- und/oder Dankbotschaft hören kann, die in Audiodateien enthalten ist, die von dem Datei- und/oder Datenkbankserver (7) von dem Ausführungs-Programmmodul (17) abgerufen werden und durch das Kommunikations-Programmmodul (12) an das Telefon (27) übertragen werden.

18. Verfahren gemäß einem der Ansprüche 15 bis 17, **gekennzeichnet durch** die folgenden Durchführungsschritte:
- der Sender überträgt eine geschriebene Nachricht an den Netzserver (18);
- der Netzserver (18) sendet eine Nachricht (15) in einem Standardformat, die die geschriebene Nachricht enthält, an eine Nachrichtenübermittlungs-Komponente (14), die auf einem Applikations-Server (1) bereitsteht;
- die Nachrichtenübermittlungs-Komponente (14) aktiviert ein Ausführungs-Programmmodul (17);
- das Ausführungs-Programmmodul (17) ruft einen Befehlsatz von dem Datei- und/oder Datenbankserver (7) ab;
- das Ausführungs-Programmmodul (17) überträgt eine SMS-Nachricht, die der geschriebenen Nachricht entspricht, an das Telefon (29) des Empfängers.

## Revendications

1. Système pour intégrer de la parole et des données dans des réseaux de télécommunication comprenant :
- un ou plusieurs serveurs d'application (1) mutuellement connectés à travers un réseau de données (2) et pourvus d'au moins un microprocesseur (3), une mémoire RAM (4), un interface de réseau (5), qui sont commandés par un système d'exploitation (6) pourvu d'un gestionnaire de message ;
- au moins un serveur (7) agissant en tant que serveur de fichiers et/ou de base de données ;
- un ou plusieurs dispositifs de communication (10) qui sont installés sur au moins un serveur d'application (1) qui sont connectés au réseau téléphonique (11);
dans lequel :
- lesdits dispositifs de communication (10) sont commandés par des plug-ins de communication (12) supportés par une plateforme de logiciel (13) installée sur les serveurs d'application (1) ;
- ladite plateforme de logiciel (13) utilise un ou plusieurs plug-ins (12, 16, 17) selon les données reçues par un ou plusieurs composants traitant les messages (14) adaptés à recevoir dans le réseau (2) des messages (15) dans un format standard contenant des données pour l'exécution de ces plug-ins (12, 16, 17), lesdits messages étant structurés d'une manière indépendante du contenu pertinent ;
- lesdits plug-ins (12, 16, 17) comprenant un ou plusieurs plug-ins d'exécution (17) qui exécute les instructions transmises par les composants traitant les messages (14) selon les données contenues dans lesdits messages (15) ;
**caractérisé en ce que** :
- ledit serveur de fichiers et/ou de base de données (7) comprend d'autres données pour exécuter lesdites instructions pour les plug-ins d'exécution (17) ;
- lesdits plug-ins (12, 16, 17) supportés par la plateforme de logiciel (13) installée sur un serveur d'application (1) comprenant un composant de génération de messages (36) pour envoyer d'autres messages (15) dans un format standard aux plug-ins (12, 16, 17) supportés par une plateforme de logiciel (13) installée sur d'autres serveurs d'application (1) ;
- lesdits autres messages (15) comprenant des données obtenues à partir du serveur de fichiers et/ou de base de données (7) ;
- lesdits composants traitant les messages (14) étant adaptés à être activés par un événement consistant en une commande automatique générée par un programme ou par une commande manuelle générée par un utilisateur ou un opérateur, lesdits commandes étant contenues dans des messages (15) dans un format standard transmis à travers un ou plusieurs canaux de communication.

2. Système selon la revendication 1, **caractérisé en ce que** lesdits plug-ins (12, 16, 17) comprennent un ou plusieurs plug-ins de routage (16) qui interprètent les messages (15) dans un format standard et les dirigent parmi les divers serveurs d'application (1) selon le type d'instructions qu'ils contiennent et/ou la charge de travail momentanée de chaque serveur d'application (1).

3. Système selon l'une quelconque des revendications précédentes, **caractérisé en ce que** lesdits plug-ins de communication (12) comprennent au moins un plug-in adapté à extraire à partir d'un message (15) et/ou à partir du serveur de fichiers et/ou de base de données (7) le contenu d'un e-mail et des pièces jointes, s'il y'en a, à envoyer, pour associer ce contenu à une ou plusieurs adresses de récepteur obtenues à partir du même message (15) et/ou serveur de fichiers et/ou de base de données (7), ainsi que pour envoyer un ou plusieurs e-mail en se connectant à travers un dispositif de communication (10), par exemple un modem numérique, à un réseau téléphonique (11).

4. Système selon l'une quelconque des revendications précédentes, **caractérisé en ce que** lesdits plug-ins de communication (12) comprennent au moins un plug-in adapté à extraire à partir d'un message et/ou à partir du serveur de fichiers et/ou de base de données (7) le contenu d'un message SMS à envoyer, pour associer ce contenu à un ou plusieurs numéros de téléphone de récepteur obtenus à partir du même message (15) et/ou du même serveur de fichiers et/ou de base de données (7), ainsi que pour envoyer un ou plusieurs messages SMS en se connectant à travers un dispositif de communication (10), par exemple un modem GSM, au réseau téléphonique (11).

5. Système selon l'une quelconque des revendications précédentes, **caractérisé en ce que** lesdits plug-ins de communication (12) comprennent au moins un plug-in adapté à extraire à partir d'un message (15) et/ou à partir d'un serveur de fichier et/ou de base de données (7) le contenu d'un message fax à envoyer, pour associer ce contenu à un ou plusieurs numéros de téléphone de récepteur obtenus à partir du même message (15) et/ou du même serveur de fichiers et/ou de base de données (7), ainsi que pour envoyer un ou plusieurs messages fax en se connectant à travers un dispositif de communication (10), par exemple un modem fax, au réseau téléphonique (11).

6. Système selon l'une quelconque des revendications précédentes, **caractérisé en ce que** lesdits plug-ins de communication (12) comprennent un plug-in adapté à transmettre et/ou à recevoir des communications téléphoniques à travers un dispositif de communication (10).

7. Système selon 1a revendication 6, **caractérisé en ce que** ledit dispositif de communication (10) consiste en au moins une carte de téléphone adaptée à envoyer des communications vocales ou audio en rappelant un ou plusieurs fichiers audio, pour recevoir et envoyer des tonalités multifréquences, ainsi que pour enregistrer des communications vocales ou audio en les transformant en fichiers audio.

8. Système selon la revendication 7, **caractérisé en ce que** ladite carte de téléphone (10) est adaptée à appeler et à connecter mutuellement plusieurs lignes, de préférence avec la reconnaissance de la présence d'un répondeur, si connecté à une ligne.

9. Système selon l'une quelconque des revendications précédentes, **caractérisé en ce que** ladite plateforme de logiciel (13) comprend un composant d'activation de plug-ins (31), à travers lequel chaque serveur d'application (1) est configuré de manière à permettre l'activation d'un certain nombre de composants traitant les messages (14) sur des files d'attente de messages.

10. Système selon la revendication 9, **caractérisé en ce que** ladite configuration des serveurs d'application (1) est déterminée d'une manière manuelle avec les données transmises par un client (22) connecté audit réseau (2).

11. Système selon la revendication 9, **caractérisé en ce que** ladite configuration des serveurs d'application (1) est déterminée d'une manière automatique avec les données présentes dans le serveur de fichiers et/ou de base de données.

12. Système selon l'une quelconque des revendications 9 à 11, **caractérisé en ce que** ledit composant d'activation de plug-in (31) comprend un objet de logiciel (32) pour la connexion à distance avec les serveurs d'application (1) à travers un ou plusieurs clients (22).

13. Système selon l'une quelconque des revendications précédentes, **caractérisé en ce qu'**un serveur Web (18) connecté à Internet (20) ou à un réseau Intranet (21) est également connecté audit réseau (2).

14. Système selon l'une quelconque des revendications précédentes, **caractérisé en ce qu'**un réseau et/ou un contrôleur de file d'attente de messages (26) est également connecté audit réseau (2).

15. Procédé qui peut être réalisé au moyen du système selon l'une quelconque des revendications précédentes **caractérisé en ce qu'**il comprend les étapes fonctionnelles suivantes :
- un expéditeur se connecte à un serveur Web (18) ;
- l'expéditeur sélectionne au moins une pièce musicale parmi une liste de pièces musicales contenues dans le serveur Web (18) et transmet le numéro de téléphone d'un récepteur ;
- le serveur Web (18) envoie un message (15) sous un format standard contenant ledit numéro de téléphone et les informations concernant la pièce musicale choisie par l'expéditeur à un composant de traitement de message (14) attendant sur un serveur d'application (1) ;
- ledit composant de traitement de messages (14) active un plug-in d'exécution (17) lors de la réception dudit message ;
- ledit plug-in d'exécution (17) rappelle à partir du serveur de fichiers et/ou de base de données (7) un ensemble d'instructions et un fichier audio correspondant à la pièce musicale choisie par l'expéditeur ;
- ledit plug-in d'exécution (17) active un plug-in de communication (12) et appelle le numéro de téléphone (29) de l'expéditeur ;
- ledit plug-in d'exécution (17) transmet au téléphone (29) de l'expéditeur la pièce musicale choisie par l'expéditeur.

16. Procédé selon la revendication 15, **caractérisé en ce qu'**il comprend les étapes fonctionnelles suivantes :
- l'expéditeur transmet au serveur Web (18) son propre numéro de téléphone ;
- le serveur Web (18) envoie un message (15) dans un format standard contenant ledit numéro de téléphone à un composant de traitement de message (14) attendant sur un serveur d'application (1) ;
- ledit composant de traitement de messages (14) active un plug-in d'exécution (17) ;
- ledit plug-in d'exécution (17) rappelle un ensemble d'instructions à partir d'un serveur de fichiers et/ou de base de données (7) ;
- ledit plug-in d'exécution (17) active un plug-in de communication (12) et appelle le numéro de téléphone (27) de l'expéditeur ;
- l'expéditeur dicte au téléphone (27) un message vocal qui est enregistré dans un fichier audio ;
- ledit plug-in d'exécution (17) transmet au téléphone (29) du récepteur ledit message vocal.

17. Procédé selon la revendication 16, **caractérisé en ce qu'**avant et/ou après que l'expéditeur dicte au téléphone (27) ledit message vocal, il peut écouter un message de bienvenue et/ou de remerciement contenu dans des fichiers audio qui sont rappelés à partir du serveur de fichiers et/ou de base de données (7) à partir dudit plug-in d'exécution (17) et qui sont transmis audit téléphone (27) par ledit plug-in de communication (12).

18. Procédé selon l'une quelconque des revendications 15 à 17, **caractérisé en ce qu'**il comprend les étapes fonctionnelles suivantes :
- l'expéditeur transmet un message écrit au serveur Web (18) ;
- le serveur Web (18) envoie un message (15) dans un format standard contenant ledit message écrit à un composant de traitement de message (14) attendant sur un serveur d'application (1) ;
- ledit composant de traitement de message (14) active un plug-in d'exécution (17);
- ledit plug-in d'exécution (17) rappelle un ensemble d'instructions à partir du serveur de fichiers et/ou de base de données (7) ;
- ledit plug-in d'exécution (17) transmet au téléphone (29) du récepteur un message SMS correspondant audit message écrit.
